# EUROPEAN PATENT SPECIFICATION

(11) **EP 3 416 335 B1**
(45) Date of publication and mention of the grant of the patent: **26.02.2020**
(21) Application number: 17894674.5
(22) Date of filing: 16.05.2017
(51) Int. Cl.: H04L 12/24, H04L 12/26, H04L 29/06

(54) **OPTIMIZATION METHOD AND SYSTEM ON BASIS OF NETWORK STATUS OF PUSH TERMINAL AND PUSH TERMINAL**
OPTIMIERUNGSVERFAHREN UND -SYSTEM AUF BASIS DES NETZWERKSTATUS EINES PUSH-ENDGERÄTS SOWIE PUSH-ENDGERÄT
PROCÉDÉ ET SYSTÈME D'OPTIMISATION SUR LA BASE DE L'ÉTAT DE RÉSEAU D'UN TERMINAL À MODE POUSSÉE ET TERMINAL À MODE POUSSÉE

(30) Priority: 05.04.2017 CN 201710216528
(43) Date of publication of application: 19.12.2018
(73) Proprietor: Wangsu Science & Technology Co., Ltd., Shanghai 200030 (CN)
(72) Inventor: DU, Weikun, Shanghai 200030 (CN); CHEN, Guohuangshou, Shanghai 200030 (CN)
(74) Representative: Hanna Moore + Curley
(86) International application number: PCT/CN2017/084456
(87) International publication number: WO 2018/184277

(56) References cited:
- EP-A1- 1 622 385
- EP-A2- 2 685 742
- CN-A- 101 990 087
- CN-A- 104 135 444
- CN-A- 104 602 044
- CN-A- 105 791 836
- US-A1- 2002 140 851
- US-A1- 2014 146 676

## Description

### FIELD OF THE DISCLOSURE

The present disclosure generally relates to the field of network technology and, more particularly, relates to a network status of stream push terminal-based optimization method, a system, and a stream push terminal thereof

### BACKGROUND

In recent years, with the rapid development of Internet technology, various streaming media applications have gradually entered the daily life of the majority of Internet users. Many live streaming-like real-time businesses have attracted a large number of users because of their original and innovative content. Therefore, how to optimize audio and video delay and improve user experience has become the development direction of audio and video live streaming services.

At present, with the development of the country's bandwidth acceleration and the rapid development of mobile communication technologies, people are no longer subject to geographical constraints. They can access texts, pictures, and videos through the Internet anytime and anywhere, which greatly enriches people's life in spare time. With the popularization of smartphones and the rapid development of mobile bandwidth, pushing streams using mobile phones has become an important method for video streaming, and more and more people have begun to use mobile phones to broadcast live videos.

However, existing mobile networks have the disadvantages of instability, variability, and being easily affected by the environments and locations, resulting in instability of stream push on the mobile terminals. In addition, the uploading bandwidth on the mobile stream push terminals is uncontrollable and thus is easily affected by objective factors. In the event of bandwidth fluctuations, the viewing terminal is prone to lagging, blurred screen, and increased delay, etc., which will affect the smoothness in watching videos and thus influence the customer experience. The document US 2014/0146676 A1 discloses a system that comprises a network device adapted to receive a media stream that includes a plurality of network packets. The network packets are transmitted or dropped based at least on a priority level associated with each network packet in the plurality of network packets.

### BRIEF SUMMARY OF THE DISCLOSURE

To solve the problems in the existing technology, embodiments of the present disclosure provide an optimization method based on the network status of a stream push terminal, a optimization system based on the network status of a stream push terminal, and a stream push terminal thereof. The technical solutions are as indicated in the claims that follow.

The technical solutions provided by the embodiments of the present disclosure give rise to the following beneficial effects: they allow real-time inspection of the network status of the stream push terminal, real-time monitoring of the variations of the upstream bandwidth, control of production from the source, reduction of the production volume, and reduction of the amount of uploading data. This allows clients to smoothly push streams under the situation that the upstream bandwidth of the stream push terminal is not optimal, which greatly improves the viewing experience of users. When the bandwidth is detected to gradually get better, frame dropping is stopped, so that the quality of the pushed streams in the stream push terminal is ensured.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a flowchart of a network status of stream push terminal-based optimization method according to one embodiment of the present disclosure;
FIG. 2 is a flowchart of detailed sub-steps of Step S1 shown FIG. 1 according to one embodiment of the present disclosure;
FIG. 3 is a schematic diagram of an internal structure of a network status of stream push terminal-based optimization system 10 according to one embodiment of the present disclosure; and
FIG. 4 is a schematic diagram of an internal structure of a determination module 111 of a stream push terminal 11 shown in FIG. 3 according to one embodiment of the present disclosure.

### DETAILED DESCRIPTION

To make the objectives, technical solutions, and advantages of the present disclosure clearer, specific embodiments of the present disclosure will be made in detail with reference to the accompanying drawings. It should be understood that the specific embodiments described herein are merely used to explain the present disclosure and shall not be construed as limiting the present disclosure.

A network status of stream push terminal-based optimization method consistent with the present disclosure will be described in detail hereinafter.

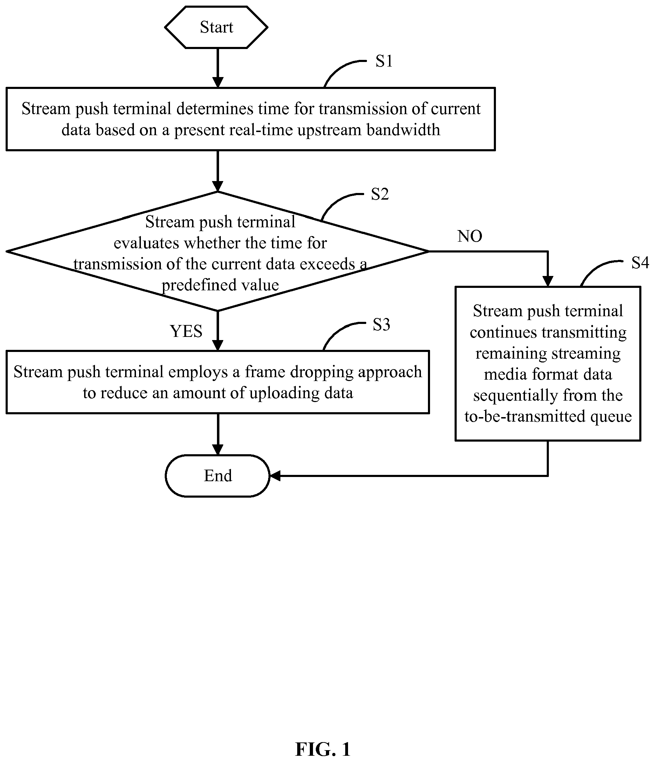

Referring to FIG. 1, a flowchart of a network status of stream push terminal-based optimization method according to one embodiment of the present disclosure is provided.

In one embodiment, the network status of stream push terminal-based optimization method is applied to a network status of stream push terminal-based optimization system, where the network status of stream push terminal-based optimization system includes a stream push terminal, a viewing terminal, and a relay terminal. The stream push terminal pushes the collected streaming media format data, through the relay terminal, to the viewing terminal for viewing. The stream push terminal refers to a terminal device of a user, such as a mobile phone, a tablet, or a personal digital assistant, etc. The relay terminal may include various transit devices in the network, such as routers and servers, and may specifically be a CDN (content delivery network) streaming media cluster. The viewing terminal may include various receiving and display terminals for streaming media data, such as mobile display terminals (e.g., a mobile phone, a tablet, etc.) and non-mobile display terminals (e.g., a desktop computer, etc.). The stream push terminal includes at least a voice collection device (e.g., a microphone, etc.) and a video capture device (e.g., a camera, etc.), through which the streaming media format data is collected. The collected streaming media format data is pushed, through forwarding by the relay terminal, to the viewing terminal for viewing.

The method of the present disclosure mainly optimizes the stream push terminal, that is, optimize from the source. The function of the stream push terminal may be divided into three processes: collection, encoding, and transmission, each of which affects each other. The collection comes first, the coding later, and then the transmission. This is a production and consumption procedure. From the transmission process, the present disclosure determines whether the previous processes have dropped frames based on the situation of eventual consumption, and controls the production based on the eventual situation, that is, to control the collection frequency directly from the collection process.

At Step S1, the stream push terminal determines the time for transmission of the current data based on the present real-time upstream bandwidth.

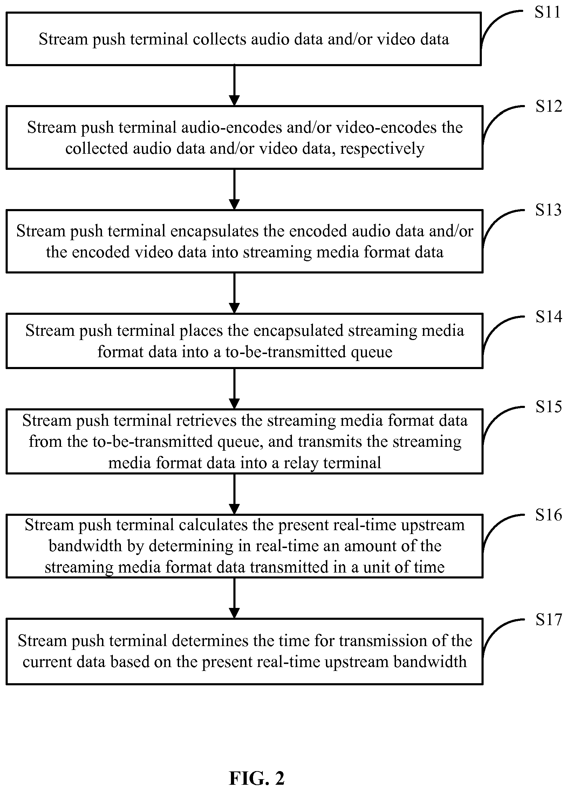

In one embodiment, the Step S1 of determining, by the stream push terminal, the time for transmission of the current data based on the present real-time upstream bandwidth specifically includes seven sub-steps S11-S17, as shown in FIG. 2.

Referring to FIG. 2, a flowchart of detailed sub-steps of Step S1 shown in FIG. 1 according to one embodiment of the present disclosure is illustrated.

At Step S11, the stream push terminal collects audio data and/or video data.

In one embodiment, the stream push terminal collects voice data, such as pulse code modulation (PCM) format voice data, through its voice collection device (e.g., a microphone, etc.). At the same time, the stream push terminal collects video data in a format like YUV or voice data in a format like PCM in a callback manner through its video capture device (e.g., a camera, etc.) or an interface of the system.

In one embodiment, specific collection process may be, for example, as follows:
(1) For video: collect video data through its video capture device (e.g., camera, etc.), and set up the frame rate, the width and height, etc. For examples, the frame rate is 25 frames/sec, the height and weight are 720*1080, and the system callbacks YUV data every 1000 ms/25 = 40 ms.
(2) For audio: collect voice data through its voice collection device (e.g., a microphone, etc.), and set up the sampling rate, the number of channels, the number of bits, etc. For example, the sampling rate is 44,100, the number of channels is 2, and the number of bits is 16. That is, 44,100 samples are collected per second, and each sample has 2 channels, each with 16 bits.

At Step S12, the collected audio data and/or video data are respectively audio-encoded and/or video-encoded. For example, the YUV and PCM data are respectively encoded into H.264 and AAC data using encoding tools such as FFMPEG, X264, FAAC, and hardcoding.

In one embodiment, an H.264 video encoding method is used to encode the collected video data into H.264 format video data, and an advanced audio coding (AAC) method is used to encode the collected audio data into AAC format audio data.

In one embodiment, specific encoding process may be, for example, as follows:
(1) Video encoding: initialize video encoding parameters, including the width and height, the frame rate, the bit rate, and the bit rate mode, etc., call the encoding interface of an encoder, encode the YUV data called back by the system into H.264 data, and encapsulate the H.264 data into streaming media format through a streaming protocol submodule. For example, < note that paragraphs from [0029] to [0065] are missing due to the renumbering in pages 2-6 as submitted on 30-08-2019 > the width and height are 720*1080, the frame rate is 25, the code rate is 1 Mbps, etc., and the YUV data is encoded into H.264 data using X264, FFMPEG, or hardcoding.
(2) Audio coding: initialize audio encoding parameters, including the sampling rate, the number of channels, and the number of bits, etc., and encode the PCM data called back by the system into AAC data through the encoding interface of an AAC encoder. For example, the sampling rate is 44,100, the number of channels is 2, the number of bits is 16, and the PCM data is encoded into AAC data using encoders such as FAAC and hardcoding.
(3) Sequentially place the audio/video data into the streaming protocol submodule based on the sequence of collection, and convert the audio/video data into streaming media format data.

At Step S13, the encoded audio data and/or the encoded video data are encapsulated into streaming media format data. Based on different streaming protocols, such as the RTMP (real-time messaging protocol) streaming protocol, the H.264 and AAC data are encoded into data conforming to the RTMP protocol.

In one embodiment, the RTMP protocol is employed to encapsulate the encoded audio data and/or the encoded video data into RTMP format streaming media data.

In one embodiment, specific encapsulation process may be, for example, as follows:
(1) Establish a connection with a server using the RTMP protocol, and acquire an address for broadcasting streams.
(2) Retrieve the H.264 data, the AAC data, etc. that are generated by the encoders, generate a sequence based on the time of collection by the encoders, and based on the time in the sequence, encapsulate the H.264 data, the AAC data, etc., respectively, according to the RTMP protocol.
(3) Place the encapsulated streaming media format data into a to-be-transmitted queue. When placing the encapsulated streaming media format data into the queue, the encoding information, such as the width and height of the video, the bit rate, the frame rate, the audio sampling rate, and the number of channels, is placed into the queue as well. The data placed into the queue may wait for data transmission by the transmission module.

At Step S14, the encapsulated streaming media format data is placed into the to-be-transmitted queue.

In one embodiment, a temporary storage area is assigned in the memory of the stream push terminal for temporarily storing the streaming media data. The streaming media data encapsulated according to the RTMP protocol is placed into the to-be-transmitted queue, and the to-be-transmitted queue is stored in the temporary storage area of the memory.

At Step S15, the streaming media format data is retrieved from the to-be-transmitted queue and is transmitted to the relay terminal.

At Step S16, the present real-time upstream bandwidth is calculated by determining in real-time an amount of streaming media format data transmitted in a unit of time.

In one embodiment, specific calculation process may be, for example, as follows:
(1) After retrieving the data from the queue, transmit a frame and record the time used for the transmission and the size of the transmitted data.
(2) Because a delay is determined based on the real-time transmission rate and the buffered data in the to-be-transmitted queue, configuring a unit of time for counting/calculation becomes necessary, which is called the unit of time. Based on the configured unit of time, determine the total data transmitted in a currently configured unit of time, and the total data/ the total duration = the transmitting rate.
(3) Calculate the amount of buffered remaining data in the to-be-transmitted queue, and determine the time for transmission of the current to-be-transmitted streaming media data based on the calculated upstream bandwidth and the data amount of the buffered remaining streaming media data in the to-be-transmitted queue.

In one embodiment, the unit of time can be flexibly configured based on the requirements. For example, the unit of time is 1 s. Partial data may be retrieved from the streaming media data in the to-be-transmitted queue and be placed into the transmission module for transmission, and the amount of the part of the streaming media data that is transmitted in a unit of time may be determined in real-time. For example, 8 MB of streaming media data is transmitted within a unit of time of 1 s, and the calculated transmission rate for upstreaming data is 8 Mbps, then the present upstream bandwidth is 1 M.

At Step S17, the time for transmission of the current data is determined based on the present real-time upstream bandwidth.

In one embodiment, after partial data has been transmitted to determine the upstream bandwidth, the amount of buffered remaining data in the to-be-transmitted queue is calculated. Based on the calculated upstream bandwidth and the data amount of the buffered remaining streaming media data in the to-be-transmitted queue, the time for transmission of the current to-be-transmitted streaming media data is then calculated. For example, the unit of time is 1 s, the streaming media data in the to-be-transmitted queue has a total size of 12 MB, and the transmission rate of the upstreaming data calculated from the previously retrieved part of the data (e.g., 8 MB) in a unit of time is 8 Mbps, that is, the upstream bandwidth is 1 M. Then, the calculated amount of the remaining streaming media data is 4 MB. Therefore, based on the present real-time upstream bandwidth and the amount of the remaining streaming media data, the calculated time for transmission of the current to-be-transmitted streaming media data is 500 ms.

That is, it is predicted to take 500 ms to finish transmission of the remaining streaming media data.

Referring back to FIG. 1, at Step S2, the stream push terminal evaluates whether the time for transmission of the current data exceeds a predefined value.

In one embodiment, the predefined value can be flexibly defined based on the requirements. For example, the predefined value is 400 ms.

If the time for transmission of the current data exceeds the predefined value, then the frame dropping approach is employed to reduce the amount of uploading data at Step S3.

In one embodiment, specific frame dropping process may be, for example, as follows:
(1) Based on the total amount of data currently buffered and the current real-time transmission rate, calculate: the total amount of data/the real-time transmission rate = the time for transmission. The predefined time for transmission is denoted as T1, and the present time for transmission is denoted as Tn.
(2) When encoding, initialize a frame rate ofk, predefine a frame dropping lower limit of k1, and upper limit of k2 as current predefined frame rates, and denote the current actual frame rate as kn. Initialize kn = k, and the range for the current frame rate lies between k1 and k2, that is, k1 ≤ kn ≤ k2. In general, by default, k2 = k. That is, the upper limit of k2 is initialized. The new frame rate is kn = kn/(Tn/T1), and this frame rate changes in real time.
(3) If the time for transmission of the current data exceeds the predefined value, that is, Tn > T1, the frame dropping approach is employed to reduce the amount of uploading data. Specific frame dropping process includes: if kn > k2, then kn = k2; and if kn < k1, then kn = k1.
(4) If the time for transmission of the current data does not exceed the predefined value, that is, Tn < T1, then gradually increase the frame rate until it recovers to the current maximum frame rate. The formula for the increasing process is: new kn = kn/(Tn/T1).

In one embodiment, for example, the initialized frame rate is set as 25, the upper limit is 25, and the lower limit is 10. Assume that the calculated time for transmission of the current data is 500 ms as stated in the above example. Since 500 ms is greater than the predefined value of 400 ms, if all data is uploaded, the influence of the bandwidth may lead to a poor viewing experience such as lagging, blurred screen, or increased delay, etc. in the pushed live streams received in the viewing terminal. Therefore, in order to improve the viewing experience, the frame dropping module is activated, and the new frame rate is kn = kn/(Tn/T1). Based on the formula, the new kn = 25/(500/400). That is, kn = 20 frames/sec, or 20 frames are generated per second. The amount of uploading data may be reduced by employing the frame dropping approach until the time for transmission of the amount of the buffered remaining data is less than the predefined value of 400 ms. If the time for transmission of the current data is calculated as 300 ms in the above example, the current frame rate is 20, and the new frame rate is kn = kn/(Tn/T1), based on the formula, the new kn = 20/(300/400). That is, kn = 26 frames/sec. Because kn > the upper limit k2, kn = k2 = 25 frames/sec.

If the time for transmission of the current data does not exceed the predefined value, and the frame rate reaches the upper limit, continues transmitting remaining streaming media format data sequentially from the to-be-transmitted queue at Step S4.

In one embodiment, specific transmission process may be, for example, as follows:
(1) The RTMP protocol-based inter-connection with the server has already been set up using the RTMP streaming protocol. To-be-transmitted streaming media format data is circularly retrieved from the to-be-transmitted queue and is transmitted to the streaming media data.
(2) The server receives the streaming media format data from the client terminal, and distributes it to each client terminal.

In one embodiment, if the calculated time for transmission of the current data is 150 ms, which is less than the predefined value of 400 ms, it means that the current upstream bandwidth is sufficient. In order to ensure the quality of the pushed streams at the stream push terminal, frame dropping is stopped, and the frame rate is increased. Further, sequential transmission of the remaining streaming media format data from the to-be-transmitted queue continues, to ensure the smoothness of the stream push service and improve the viewing experience in the viewing terminal.

The TCP protocol-based network status of stream push terminal-based optimization method provided by the present disclosure allows real-time inspection of the network status of the stream push terminal, real-time monitoring of the variations of the upstream bandwidth, control of production from the source, reduction of production volume, and reduction of the amount of uploading data. This allows clients to smoothly push streams under the situation that the upstream bandwidth of the stream push terminal is not optimal, which greatly improves the viewing experience of users. When the bandwidth is detected to gradually get better, frame dropping is stopped, so that the quality of the pushed streams in the stream push terminal is ensured.

A network status of stream push terminal-based optimization system consistent with the present disclosure will be described in detail hereinafter.

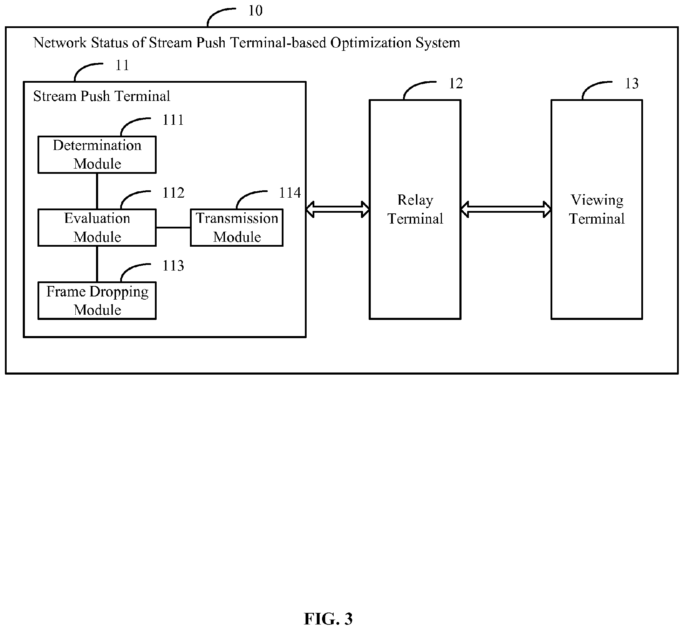

Referring to FIG. 3, a schematic diagram of an internal structure of a TCP-based network status of stream push terminal-based optimization system 10 according to one embodiment of the present disclosure is illustrated.

In one embodiment, the network status of stream push terminal-based optimization system 10 includes a stream push terminal 11, a viewing terminal 13, and a relay terminal 12, where the stream push terminal 11 pushes the collected streaming media format data, through the relay terminal 12, to the viewing terminal 13 for viewing. The stream push terminal 11 refers to a terminal device of a user, including a mobile phone, a tablet, and a personal digital assistant, etc. The relay terminal 12 may include various transit devices in the network, such as routers and servers. The viewing terminal 13 may include various receiving and display terminals for streaming media data, such as mobile display terminals (e.g., a mobile phone, a tablet, etc.) and non-mobile display terminals (e.g., a desktop computer, etc.). The stream push terminal 11 includes at least a voice collection device (e.g., a microphone, etc.) and a video capture device (e.g., a camera, etc.), through which the streaming media format data is collected. The collected streaming media format data is pushed, through forwarding by the relay terminal 12, to the viewing terminal for viewing. Here, the relay terminal 12 may include multiple units. The stream push terminal 11 pushes the collected streaming media format data, through a single relay terminal 12 or multiple relay terminals 12, to the viewing terminal 13 for viewing.

The system of the present disclosure mainly optimizes the stream push terminal 11, that is, optimize from the source. The function of the stream push terminal 11 may be divided into three processes: collection, encoding, and transmission, each of which affects each other. The collection comes first, the coding later, and then the transmission. This is a production and consumption procedure. Through the transmission process, the present disclosure determines whether the previous processes have dropped frames based on the situation of eventual consumption, and controls the production based on the eventual situation, that is, to control the collection frequency directly from the collection process.

The stream push terminal 11 specifically includes: a determination module 111, an evaluation module 112, a frame dropping module 113, and a transmission module 114.

The determination module 111 is configured to determine the time for transmission of the current data based on the present real-time upstream bandwidth.

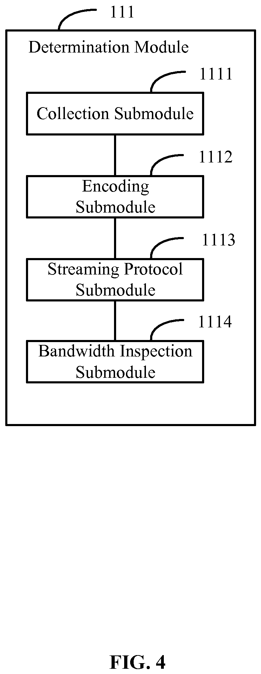

Here, the determination module 111 specifically includes: a collection submodule 1111, an encoding submodule 1112, a streaming protocol submodule 1113, and a bandwidth inspection submodule 1114, as shown in FIG. 4.

Referring to FIG. 4, a schematic diagram of an internal structure of a determination module 111 of a stream push terminal 11 shown in FIG. 3 according to one embodiment of the present disclosure is illustrated.

The collection submodule 1111 is configured to collect audio data and/or video data.

In one embodiment, the collection submodule 1111 collects voice data, such as PCM format voice data, through its voice collection device (e.g., a microphone, etc.). At the same time, the collection submodule 1111 collects video data in a format like YUV or voice data in a format like PCM in a callback manner through its video capture device (e.g., a camera, etc.) or an interface of the system.

In one embodiment, specific collection process may be, for example, as follows:
(1) For video: collect video data through its video capture device (e.g., camera, etc.), and set up the frame rate, the width and height, etc. For examples, the frame rate is 25 frames/sec, the height and weight are 720*1080, and the system callbacks YUV data every 1000 ms/25 = 40 ms.
(2) For audio: collect voice data through its voice collection device (e.g., a microphone, etc.), and set up the sampling rate, the number of channels, the number of bits, etc. For example, the sampling rate is 44,100, the number of channels is 2, and the number of bits is 16. That is, 44,100 samples are collected per second, and each sample has 2 channels, each with 16 bits.

The encoding submodule 1112 is configured to audio-encode and/or video-encode the collected audio data and/or video data, respectively. For example, the YUV and PCM data are respectively encoded into H.264 and AAC data using encoding tools such as FFMPEG, X264, FAAC, and hardcoding.

In one embodiment, an H.264 video encoding method is used to encode the collected video data into H.264 format video data, and an AAC method is used to encode the collected audio data into AAC format audio data.

In one embodiment, specific encoding process may be, for example, as follows:
(1) Video encoding: initialize video encoding parameters, including the width and height, the frame rate, the bit rate, and the bit rate mode, etc., call the encoding interface of an encoder, encode the YUV data called back by the system into H.264 data, and encapsulate the H.264 data into streaming media format through a streaming protocol submodule. For example, the width and height are 720*1080, the frame rate is 25, the code rate is 1 Mbps, etc., and the YUV data is encoded into H.264 data using X264, FFMPEG, or hardcoding.
(2) Audio coding: initialize audio encoding parameters, including the sampling rate, the number of channels, and the number of bits, etc., and encode the PCM data called back by the system into AAC data through the encoding interface of an AAC encoder. For example, the sampling rate is 44,100, the number of channels is 2, the number of bits is 16, and the PCM data is encoded into AAC data using encoders such as FAAC, and hardcoding.
(3) Sequentially place the audio/video data into the streaming protocol submodule based on the sequence of collection, and convert the audio/video data into streaming media format data.

The streaming protocol submodule 1113 is configured to encapsulate the encoded audio data and/or the encoded video data into streaming media format data. Based on different streaming protocols, such as the RTMP streaming protocol, the H.264 and AAC data are encoded into data conforming to the RTMP protocol.

In one embodiment, the RTMP protocol is employed to encapsulate the encoded audio data and/or the encoded video data into RTMP format streaming media data.

In one embodiment, specific encapsulation process may be, for example, as follows:
(1) Establish a connection with a server using the RTMP protocol, and acquire an address for broadcasting streams.
(2) Retrieve the H.264 data, the AAC data, etc. that are generated by the encoders, generate a sequence based on the time of collection by the encoders, and based on the time in the sequence, encapsulate the H.264 data, the AAC data, etc., respectively, according to the RTMP protocol.
(3) Place the encapsulated streaming media format data into a to-be-transmitted queue. When placing the encapsulated streaming media format data into the queue, the encoding information, such as the width and height of the video, the bit rate, the frame rate, the audio sampling rate, and the number of channels, etc., is placed into the queue as well. The data placed into the queue may wait for data transmission by the transmission module.

The bandwidth inspection submodule 1114 is configured to place the encapsulated streaming media format data into the to-be-transmitted queue, calculate the present real-time upstream bandwidth by determining in real-time an amount of streaming media format data transmitted in a unit of time, and determine the time for transmission of the current data based on the present real-time upstream bandwidth.

In one embodiment, a temporary storage area is assigned in the memory of the stream push terminal 11 for temporarily storing the streaming media data. The streaming media data encapsulated according to the RTMP protocol is placed into the to-be-transmitted queue, and the to-be-transmitted queue is stored in the temporary storage area of the memory.

In one embodiment, specific calculation process may be, for example, as follows:
(1) After retrieving the data from the queue, transmit a frame and record the time for the transmission and the size of the transmitted data.
(2) Because a delay is determined based on the real-time transmission rate and the buffered data in the to-be-transmitted queue, configuring a unit of time for counting/calculation becomes necessary, which is called the unit of time. Based on the configured unit of time, determine the total data transmitted in a currently configured unit of time, and the total data/the total duration = the transmitting rate.
(3) Calculate the amount of buffered remaining data in the to-be-transmitted queue, and determine the time for transmission of the current to-be-transmitted streaming media data based on the calculated upstream bandwidth and the data amount of the buffered remaining streaming media data in the to-be-transmitted queue.

In one embodiment, the unit of time can be flexibly configured based on the requirements. For example, the unit of time is 1 s. Partial data may be retrieved from the streaming media data in the to-be-transmitted queue and is placed into the transmission module for transmission, and the amount of the part of the streaming media data that is transmitted in a unit of time is determined in real-time. For example, 8 MB of streaming media data is transmitted within a unit of time of 1 s, and the calculated transmission rate for upstreaming data is 8 Mbps, then the present upstream bandwidth is 1 M.

In one embodiment, after partial data has been transmitted to determine the upstream bandwidth, the amount of buffered remaining data in the to-be-transmitted queue is calculated. Based on the calculated upstream bandwidth and the data amount of the buffered remaining streaming media data in the to-be-transmitted queue, the time for transmission of the current to-be-transmitted streaming media data is then calculated. For example, the streaming media data in the to-be-transmitted queue has a total size of 12 MB, and the transmission rate of the upstreaming data calculated from the previously retrieved part of the data (e.g., 8 MB) is 8 Mbps, that is, the upstream bandwidth is 1 M. Then, the determined amount of the remaining streaming media data is 4 MB. Therefore, based on the present real-time upstream bandwidth and the amount of the remaining streaming media data, the calculated time for transmission of the current to-be-transmitted streaming media data is 500 ms. That is, it is predicted to take 500 ms to finish transmission of the remaining streaming media data.

Referring back to FIG. 3, the evaluation module 112 is configured to evaluate whether the time for transmission of the current data exceeds a predefined value.

In one embodiment, the predefined value can be flexibly defined based on the requirements. For example, the predefined value is 400 ms.

The frame dropping module 113 is configured to employ a frame dropping approach to reduce the amount of uploading data if the time for transmission of the current data exceeds the predefined value.

In one embodiment, specific frame dropping process may be, for example, as follows:
(1) Based on the total amount of data currently buffered, and the present real-time transmission rate, calculate: the total amount of data/the real-time transmission rate = the time for transmission. The predefined time for transmission is denoted as T1, and the present time for transmission is denoted as Tn.
(2) When encoding, initialize a frame rate of k, predefine a frame dropping lower limit of k1, and upper limit of k2 as the current predefined frame rates, and denote the current actual frame rate as kn. Initialize kn = k, the current frame rate range lies between k1 and k2, that is, k1≤kn≤k2. In general, by default, k2 = k. That is, the upper limit of k2 is initialized. The new frame rate is kn = kn/(Tn/T1), and this frame rate changes in real time.
(3) If the time for transmission of the current data exceeds the predefined value, that is, Tn > T1, the frame dropping approach is employed to reduce the amount of uploading data. Specific frame dropping process includes: if kn > k2, then kn = k2; and if kn < k1, then kn = k1.
(4) If the time for transmission of the current data does not exceed the predefined value, that is, Tn < T1, then gradually increase the frame rate until it recovers to the current maximum frame rate. The formula for the increasing process is: new kn = kn/(Tn/T1).

In one embodiment, for example, the initialized frame rate is set as 25, the upper limit is 25, and the lower limit is 10. Assume that the calculated time for transmission of the current data is 500 ms as stated in the above example. Since 500 ms is greater than the predefined value of 400 ms, if all data is uploaded, the influence of the bandwidth may lead to a poor viewing experience such as lagging, blurred screen, or increased delay, etc. in the pushed live streams received in the viewing terminal 13. Therefore, in order to improve the viewing experience, the frame dropping module is activated, and the new frame rate is kn = kn/(Tn/T1). Based on the formula, the new kn = 25/(500/400). That is, kn = 20 frames/sec, or 20 frames are generated per second. The amount of uploading data may be reduced by employing the frame dropping approach until the time for transmission of the amount of the buffered remaining data is less than the predefined value of 400 ms. If the time for transmission of the current data is calculated as 300 ms in the above example, the current frame rate is 20, and the new frame rate is kn = kn/(Tn/T1), based on the formula, the new kn = 20/(300/400). That is, kn = 26 frames/sec. Because kn > the upper limit k2, kn = k2 = 25 frames/sec.

The transmission module 114 is configured to continue transmitting the remaining streaming media format data sequentially from the to-be-transmitted queue if the time for transmission of the current data does not exceed the predefined value and the frame rate reaches the upper limit.

In one embodiment, specific transmission process may be, for example, as follows:
(1) The RTMP protocol-based inter-connection with the server has already been established using the RTMP streaming protocol. To-be-transmitted streaming media format data is circularly retrieved from the to-be-transmitted queue and is transmitted to the streaming media data.
(2) The server receives the streaming media format data from the client terminal, and distributes it to each client terminal.

In one embodiment, if the calculated time for transmission of the current data is 150 ms, which is less than the predefined value of 400 ms, it means that the current upstream bandwidth is sufficient. In order to ensure the quality of the pushed streams in the stream push terminal 11, frame dropping is stopped, and the frame rate is increased. Further, sequential transmission of the remaining streaming media format data from the to-be-transmitted queue continues, to ensure the smoothness of the stream push service and improve the viewing experience in the viewing terminal.

The TCP protocol-based network status of stream push terminal-based optimization system 10 provided by the present disclosure allows real-time inspection of the network status in the stream push terminal, real-time monitoring of the variations of the upstream bandwidth, control of production from the source, reduction of production volume, and reduction of the amount of uploading data. This allows clients to smoothly push streams under the situation that the upstream bandwidth of the stream push terminal is not optimal, which greatly improves the viewing experience of users. When the bandwidth is detected to gradually get better, frame dropping is stopped, so that the quality of the pushed streams in the stream push terminal is ensured.

Embodiments of the above-described mechanisms are described merely for the illustrative purpose. The modules that are described as separate parts may or may not be physically separated, and the parts illustrated as modules may or may not be physical modules. That is, these modules may be located in one location, or distributed across multiple network entities. Based on actual needs, some or all of the modules may be selected to achieve the objectives of the present embodiments, which those of ordinary skill in the art may understand and implement without taking creative efforts.

Through the foregoing description of the embodiments, it is clear to those skilled in the art that each embodiment can be implemented by means of software plus a necessary general hardware platform, and certainly, by means of hardware as well. Based on this understanding, the technical solutions, or essentially the parts that contribute to the current technology, can be embodied in the form of a software product. This computer software product may be stored in a computer-readable storage medium, such as a ROM/RAM, a magnetic disc, an optical disc, etc., and include a variety of instructions that cause a computing device (which may be a personal computer, a server, or a network device, etc.) to implement each embodiment or methods described in certain parts of each embodiment.

## Claims

1. An optimization method based on the network status of a stream push terminal (11), the method comprising:
calculating, by the stream push terminal (11), a present real-time upstream bandwidth by determining in real-time an amount of streaming media data retrieved from a to-be-transmitted queue and transmitted to a relay terminal (12) in a unit of time;
determining, by the stream push terminal (11), time for transmission of current to-be-transmitted streaming media data in the to-be-transmitted queue based on the present real-time upstream bandwidth;
evaluating, by the stream push terminal (11), whether the time for transmission of the current to-be-transmitted streaming media data exceeds a predefined value; and
if the time for transmission of the current to-be-transmitted streaming media data exceeds the predefined value, employing a frame dropping approach to reduce an amount of uploading data.

2. The optimization method based on the network status of a stream push terminal (11) according to claim 1, wherein before calculating a present real-time upstream bandwidth by determining in real-time an amount of streaming media data retrieved from a to-be-transmitted queue and transmitted to a relay terminal (12) in a unit of time, the method further comprises:
collecting, by the stream push terminal (11), audio data and/or video data;
audio-encoding and/or video-encoding, by the stream push terminal (11), the collected audio data and/or video data, respectively;
encapsulating, by the stream push terminal (11), the encoded audio data and/or the encoded video data into streaming media data; and
placing, by the stream push terminal (11), the encapsulated streaming media data into the to-be-transmitted queue.

3. The optimization method based on the network status of a stream push terminal (11), according to claim 2, further comprising:
if the time for transmission of the current to-be-transmitted streaming media data does not exceed the predefined value, continuing transmitting, by the stream push terminal (11), remaining streaming media data sequentially from the to-be-transmitted queue.

4. An optimization system (10) based on the network status of a stream push terminal (11), the system (10) comprising a stream push terminal (11), a viewing terminal (13), and a relay terminal (12), the stream push terminal (11) pushing collected streaming media format data, through the relay terminal (12), to the viewing terminal for viewing, wherein the stream push terminal (11) specifically includes:
a determination module (111) that is configured to calculate a present real-time upstream bandwidth by determining in real-time an amount of the streaming media data retrieved from a to-be-transmitted queue and transmitted to the relay terminal (12) in a unit of time and determine time for transmission of current to-be-transmitted streaming media data based on the present real-time upstream bandwidth;
an evaluation module (112)
that is configured to evaluate whether the time for transmission of the current to-be-transmitted streaming media data exceeds a predefined value; and
a frame dropping module (113) that is configured to employ a frame dropping approach to reduce an amount of uploading data if the time for transmission of the current to-be-transmitted streaming media data exceeds the predefined value.

5. The optimization system (10) based on the network status of a stream push terminal (11) according to claim 4, wherein the determination module (111) specifically includes:
a collection submodule (1111) that is configured to collect audio data and/or video data;
an encoding submodule (1112) that is configured to audio-encode and/or video-encode the collected audio data and/or video data, respectively;
a streaming protocol submodule (1113) that is configured to encapsulate the encoded audio data and/or the encoded video data into streaming media data; and
a bandwidth inspection submodule (1114) that is configured to place the encapsulated streaming media data into a to-be-transmitted queue, retrieve the streaming media data from the to-be-transmitted queue and transmit the streaming media data to the relay terminal (12),
calculate the present real-time upstream bandwidth by determining in real-time an amount of streaming media data transmitted in a unit of time, and determine the time for transmission of the current to-be-transmitted streaming media data based on the present real-time upstream bandwidth.

6. The optimization system (10) based on the network status of a stream push terminal (11) according to claim 5, wherein the stream push terminal (11) further specifically includes:
a transmission module (114) that is configured to continue transmitting remaining streaming media data sequentially from the to-be-transmitted queue if the time for transmission of the current to-be-transmitted streaming media data does not exceed the predefined value.

7. A stream push terminal (10) comprising: a determination module (111) that is configured to calculate a present real-time upstream bandwidth by determining in real-time an amount of the streaming media data retrieved from a to-be-transmitted queue and transmitted to a relay terminal (12) in a unit of time and determine time for transmission of current to-be-transmitted streaming media data based on the present real-time upstream bandwidth;
an evaluation module (112) that is configured to evaluate whether the time for transmission of the current to-be-transmitted streaming media data exceeds a predefined value; and
a frame dropping module (113) that is configured to employ a frame dropping approach to reduce an amount of uploading data if the time for transmission of the current to-be-transmitted streaming media data exceeds the predefined value.

8. The stream push terminal (11) according to claim 7, wherein the determination module (111) specifically includes: a collection submodule (1111) that is configured to collect audio data and/or video data; an encoding submodule (1112) that is configured to audio-encode and/or video-encode the collected audio data and/or video data, respectively; a streaming protocol submodule (1113) that is configured to encapsulate the encoded audio data and/or the encoded video data into streaming media data; and a bandwidth inspection submodule (1114) that is configured to place the encapsulated streaming media data into a to-be-transmitted queue, retrieve the streaming media data from the to-be-transmitted queue and transmit the streaming media data to a relay terminal, (12) and calculate the present real-time upstream bandwidth by determining in real-time an amount of streaming media data transmitted in a unit of time.

9. The stream push terminal (11) according to claim 8, wherein the bandwidth inspection submodule (1114) is further configured to determine the time for transmission of the current to-be-transmitted streaming media data based on the present real-time upstream bandwidth.

10. The stream push terminal (11) according to claim 9, wherein the stream push terminal (11) further specifically includes:
a transmission module (114) that is configured to continue transmitting remaining streaming media data sequentially from the to-be-transmitted queue if the time for transmission of the current to-be-transmitted streaming media data does not exceed the predefined value.

## Patentansprüche

1. Optimierungsverfahren auf der Basis des Netzwerkstatus eines Stream-Push-Endgeräts (11), wobei das Verfahren umfasst:
Berechnen einer aktuellen Echtzeit-Upstream-Bandbreite durch das Stream-Push-Endgerät (11) durch Bestimmen einer Menge von Streaming-Mediendaten in Echtzeit, die aus einer Zu-Übertragen-Warteschlange abgerufen und in einer Zeiteinheit an ein Weiterleitungsendgerät (12) übertragen werden;
Bestimmen einer Zeit zur Übertragung von gegenwärtigen zu übertragenden Streaming-Mediendaten in der Zu-Übertragen-Warteschlange auf der Basis der aktuellen Echtzeit-Upstream-Bandbreite durch das Stream-Push-Endgerät (11) ;
Bewerten durch das Stream-Push-Endgerät (11), ob die Zeit zur Übertragung der gegenwärtigen zu übertragenden Streaming-Mediendaten einen vordefinierten Wert überschreitet; und
wenn die Zeit zur Übertragung der gegenwärtigen zu übertragenden Streaming-Mediendaten den vordefinierten Wert überschreitet, Einsetzen eines Frame-Auslassungsansatzes zur Verringerung einer Menge von hochladenden Daten.

2. Optimierungsverfahren auf der Basis des Netzwerkstatus eines Stream-Push-Endgeräts (11) nach Anspruch 1, wobei das Verfahren vor dem Berechnen einer aktuellen Echtzeit-Upstream-Bandbreite durch Bestimmen einer Menge von Streaming-Mediendaten in Echtzeit, die aus einer Zu-Übertragen-Warteschlange abgerufen und in einer Zeiteinheit an ein Weiterleitungsendgerät (12) übertragen werden, weiterhin umfasst:
Sammeln von Audiodaten und/oder Videodaten durch das Stream-Push-Endgerät (11);
Audiocodieren und/oder Videocodieren von jeweils den gesammelten Audiodaten und/oder Videodaten durch das Stream-Push-Endgerät (11);
Einkapseln der codierten Audiodaten und/oder der codierten Videodaten in Streaming-Mediendaten durch das Stream-Push-Endgerät (11) und
Platzieren der eingekapselten Streaming-Mediendaten in die Zu-Übertragen-Warteschlange durch das Stream-Push-Endgerät (11).

3. Optimierungsverfahren auf der Basis des Netzwerkstatus eines Stream-Push-Endgeräts (11) nach Anspruch 2, weiterhin umfassend:
wenn die Zeit zur Übertragung der gegenwärtigen zu übertragenden Streaming-Mediendaten den vordefinierten Wert nicht überschreitet, Fortsetzen eines sequentiellen Übertragens von restlichen Streaming-Mediendaten aus der Zu-Übertragen-Warteschlange durch das Stream-Push-Endgerät (11).

4. Optimierungssystem (10) auf der Basis des Netzwerkstatus eines Stream-Push-Endgeräts (11), wobei das System (10) ein Stream-Push-Endgerät (11), ein Ansichtsendgerät (13) und ein Weiterleitungsendgerät (12) umfasst, wobei das Stream-Push-Endgerät (11) gesammelte Streaming-Medienformatdaten durch das Weiterleitungsendgerät (12) zu dem Ansichtsendgerät zum Ansehen pusht, wobei das Stream-Push-Endgerät (11) spezifisch beinhaltet:
ein Bestimmungsmodul (111), das dazu konfiguriert ist, eine aktuelle Echtzeit-Upstream-Bandbreite durch Bestimmen einer Menge der Streaming-Mediendaten in Echtzeit, die aus einer Zu-Übertragen-Warteschlange abgerufen und in einer Zeiteinheit an das Weiterleitungsendgerät (12) übertragen werden, zu berechnen und eine Zeit zur Übertragung von gegenwärtigen zu übertragenden Streaming-Mediendaten auf der Basis der aktuellen Echtzeit-Upstream-Bandbreite zu bestimmen;
ein Bewertungsmodul (112), das dazu konfiguriert ist zu bewerten, ob die Zeit zur Übertragung der gegenwärtigen zu übertragenden Streaming-Mediendaten einen vordefinierten Wert überschreitet; und
ein Frame-Auslassungsmodul (113), das dazu konfiguriert ist, einen Frame-Auslassungsansatz zur Verringerung einer Menge von hochladenden Daten einzusetzen, wenn die Zeit zur Übertragung der gegenwärtigen zu übertragenden Streaming-Mediendaten den vordefinierten Wert überschreitet.

5. Optimierungssystem (10) auf der Basis des Netzwerkstatus eines Stream-Push-Endgeräts (11) nach Anspruch 4, wobei das Bestimmungsmodul (111) spezifisch beinhaltet:
ein Sammeluntermodul (1111), das dazu konfiguriert ist, Audiodaten und/oder Videodaten zu sammeln;
ein Codierungsuntermodul (1112), das dazu konfiguriert ist, jeweils die gesammelten Audiodaten und/oder Videodaten zu audiocodieren und/oder zu videocodieren;
ein Streaming-Protokoll-Untermodul (1113), das dazu konfiguriert ist, die codierten Audiodaten und/oder die codierten Videodaten in Streaming-Mediendaten einzukapseln; und
ein Bandbreiteprüfungsuntermodul (1114), das dazu konfiguriert ist, die eingekapselten Streaming-Mediendaten in eine Zu-Übertragen-Warteschlange zu platzieren, die Streaming-Mediendaten aus der Zu-Übertragen-Warteschlange abzurufen und die Streaming-Mediendaten an das Weiterleitungsendgerät (12) zu übertragen, die aktuelle Echtzeit-Upstream-Bandbreite durch Bestimmen einer Menge von Streaming-Mediendaten in Echtzeit, die in einer Zeiteinheit übertragen werden, zu berechnen und die Zeit zur Übertragung der gegenwärtigen zu übertragenden Streaming-Mediendaten auf der Basis der aktuellen Echtzeit-Upstream-Bandbreite zu bestimmen.

6. Optimierungssystem (10) auf der Basis des Netzwerkstatus eines Stream-Push-Endgeräts (11) nach Anspruch 5, wobei das Stream-Push-Endgerät (11) weiterhin spezifisch beinhaltet:
ein Übertragungsmodul (114), das dazu konfiguriert ist, ein sequentielles Übertragen von restlichen Streaming-Mediendaten aus der Zu-Übertragen-Warteschlange fortzusetzen, wenn die Zeit zur Übertragung der gegenwärtigen zu übertragenden Streaming-Mediendaten den vordefinierten Wert nicht überschreitet.

7. Stream-Push-Endgerät (10), umfassend: ein Bestimmungsmodul (111), das dazu konfiguriert ist, eine aktuelle Echtzeit-Upstream-Bandbreite durch Bestimmen einer Menge der Streaming-Mediendaten in Echtzeit, die aus einer Zu-Übertragen-Warteschlange abgerufen und in einer Zeiteinheit an ein Weiterleitungsendgerät (12) übertragen werden, zu berechnen und eine Zeit zur Übertragung von gegenwärtigen zu übertragenden Streaming-Mediendaten auf der Basis der aktuellen Echtzeit-Upstream-Bandbreite zu bestimmen;
ein Bewertungsmodul (112), das dazu konfiguriert ist zu bewerten, ob die Zeit zur Übertragung der gegenwärtigen zu übertragenden Streaming-Mediendaten einen vordefinierten Wert überschreitet; und
ein Frame-Auslassungsmodul (113), das dazu konfiguriert ist, einen Frame-Auslassungsansatz zur Verringerung einer Menge von hochladenden Daten einzusetzen, wenn die Zeit zur Übertragung der gegenwärtigen zu übertragenden Streaming-Mediendaten den vordefinierten Wert überschreitet.

8. Stream-Push-Endgerät (11) nach Anspruch 7, wobei das Bestimmungsmodul (111) spezifisch beinhaltet: ein Sammeluntermodul (1111), das dazu konfiguriert ist, Audiodaten und/oder Videodaten zu sammeln; ein Codierungsuntermodul (1112), das dazu konfiguriert ist, jeweils die gesammelten Audiodaten und/oder Videodaten zu audiocodieren und/oder zu videocodieren;
ein Streaming-Protokoll-Untermodul (1113), das dazu konfiguriert ist, die codierten Audiodaten und/oder die codierten Videodaten in Streaming-Mediendaten einzukapseln; und
ein Bandbreiteprüfungsuntermodul (1114), das dazu konfiguriert ist, die eingekapselten Streaming-Mediendaten in eine Zu-Übertragen-Warteschlange zu platzieren, die Streaming-Mediendaten aus der Zu-Übertragen-Warteschlange abzurufen und die Streaming-Mediendaten an ein Weiterleitungsendgerät (12) zu übertragen und die aktuelle Echtzeit-Upstream-Bandbreite durch Bestimmen einer Menge von Streaming-Mediendaten in Echtzeit, die in einer Zeiteinheit übertragen werden, zu berechnen.

9. Stream-Push-Endgerät (11) nach Anspruch 8, wobei das Bandbreiteprüfungsuntermodul (1114) weiterhin dazu konfiguriert ist, die Zeit zur Übertragung der gegenwärtigen zu übertragenden Streaming-Mediendaten auf der Basis der aktuellen Echtzeit-Upstream-Bandbreite zu bestimmen.

10. Stream-Push-Endgerät (11) nach Anspruch 9, wobei das Stream-Push-Endgerät (11) weiterhin spezifisch beinhaltet:
ein Übertragungsmodul (114), das dazu konfiguriert ist, ein sequentielles Übertragen von restlichen Streaming-Mediendaten aus der Zu-Übertragen-Warteschlange fortzusetzen, wenn die Zeit zur Übertragung der gegenwärtigen zu übertragenden Streaming-Mediendaten den vordefinierten Wert nicht überschreitet.

## Revendications

1. Procédé d'optimisation basé sur l'état de réseau d'un terminal de diffusion sélective de flux (11), le procédé comprenant :
calculer, par le terminal de diffusion sélective de flux (11), une bande passante de flux montant en temps réel actuelle par détermination en temps réel d'une quantité de données multimédia de diffusion en continu extraites à partir d'une file d'attente à transmettre et transmises à un terminal relais (12) dans une unité de temps ;
déterminer, par le terminal de diffusion sélective de flux (11), un temps pour une transmission de données multimédia de diffusion en continu à transmettre actuelles dans la file d'attente à transmettre sur la base de la bande passante de flux montant en temps réel actuelle ;
évaluer, par le terminal de diffusion sélective de flux (11), si le temps pour la transmission des données multimédia de diffusion en continu à transmettre actuelles dépasse ou non une valeur prédéfinie ; et
si le temps pour la transmission des données multimédia de diffusion en continu à transmettre actuelles dépasse la valeur prédéfinie, utiliser une approche de perte de trames pour réduire une quantité de données de téléversement.

2. Procédé d'optimisation basé sur l'état de réseau d'un terminal de diffusion sélective de flux (11) selon la revendication 1, dans lequel, avant le calcul d'une bande passante de flux montant en temps réel actuelle par détermination en temps réel d'une quantité de données multimédia de diffusion en continu extraites à partir d'une file d'attente à transmettre et transmises à un terminal relais (12) dans une unité de temps, le procédé comprend en outre :
collecter, par le terminal de diffusion sélective de flux (11), des données audio et/ou des données vidéo ;
réaliser un codage audio et/ou un codage vidéo, par le terminal de diffusion sélective de flux (11), sur les données audio et/ou les données vidéo collectées, respectivement ;
encapsuler, par le terminal de diffusion sélective de flux (11), les données audio codées et/ou les données vidéo codées en données multimédia de diffusion en continu ; et
placer, par le terminal de diffusion sélective de flux (11), les données multimédia de diffusion en continu encapsulées dans la file d'attente à transmettre.

3. Procédé d'optimisation basé sur l'état de réseau d'un terminal de diffusion sélective de flux (11) selon la revendication 2, comprenant en outre :
si le temps pour la transmission des données multimédia de diffusion en continu à transmettre actuelles ne dépasse pas la valeur prédéfinie, continuer de transmettre, par le terminal de diffusion sélective de flux (11), des données multimédia de diffusion en continu restantes séquentiellement à partir de la file d'attente à transmettre.

4. Système d'optimisation (10) basé sur l'état de réseau d'un terminal de diffusion sélective de flux (11), le système (10) comprenant un terminal de diffusion sélective de flux (11), un terminal de visualisation (13) et un terminal relais (12), le terminal de diffusion sélective de flux (11) réalisant une diffusion sélective de données de format multimédia de diffusion en continu collectées, par l'intermédiaire du terminal relais (12), vers le terminal de visualisation pour une visualisation, le terminal de diffusion sélective de flux (11) comprenant spécifiquement :
un module de détermination (111) qui est configuré pour calculer une bande passante de flux montant en temps réel actuelle par détermination en temps réel d'une quantité des données multimédia de diffusion en continu extraites à partir d'une file d'attente à transmettre et transmises au terminal relais (12) dans une unité de temps et déterminer un temps pour une transmission de données multimédia de diffusion en continu à transmettre actuelles sur la base de la bande passante de flux montant en temps réel actuelle ;
un module d'évaluation (112) qui est configuré pour évaluer si le temps pour la transmission des données multimédia de diffusion en continu à transmettre actuelles dépasse ou non une valeur prédéfinie ; et
un module de perte de trames (113) qui est configuré pour utiliser une approche de perte de trames pour réduire une quantité de données de téléversement si le temps pour la transmission des données multimédia de diffusion en continu à transmettre actuelles dépasse la valeur prédéfinie.

5. Système d'optimisation (10) basé sur l'état de réseau d'un terminal de diffusion sélective de flux (11) selon la revendication 4, dans lequel le module de détermination (111) comprend spécifiquement :
un sous-module de collecte (1111) qui est configuré pour collecter des données audio et/ou des données vidéo ;
un sous-module de codage (1112) qui est configuré pour réaliser un codage audio et/ou un codage vidéo sur les données audio et/ou les données vidéo collectées, respectivement ;
un sous-module de protocole de diffusion en continu (1113) qui est configuré pour encapsuler les données audio codées et/ou les données vidéo codées en données multimédia de diffusion en continu ; et
un sous-module d'inspection de bande passante (1114) qui est configuré pour placer les données multimédia de diffusion en continu encapsulées dans une file d'attente à transmettre, extraire les données multimédia de diffusion en continu à partir de la file d'attente à transmettre et transmettre les données multimédia de diffusion en continu au terminal relais (12), calculer la bande passante de flux montant en temps réel actuelle par détermination en temps réel d'une quantité de données multimédia de diffusion en continu transmises dans une unité de temps, et déterminer le temps pour la transmission des données multimédia de diffusion en continu à transmettre actuelles sur la base de la bande passante de flux montant en temps réel actuelle.

6. Système d'optimisation (10) basé sur l'état de réseau d'un terminal de diffusion sélective de flux (11) selon la revendication 5, dans lequel le terminal de diffusion sélective de flux (11) comprend en outre spécifiquement :
un module de transmission (114) qui est configuré pour continuer de transmettre des données multimédia de diffusion en continu restantes séquentiellement à partir de la file d'attente à transmettre si le temps pour la transmission des données multimédia de diffusion en continu à transmettre actuelles ne dépasse pas la valeur prédéfinie.

7. Terminal de diffusion sélective de flux (11) comprenant :
un module de détermination (111) qui est configuré pour calculer une bande passante de flux montant en temps réel actuelle par détermination en temps réel d'une quantité des données multimédia de diffusion en continu extraites à partir d'une file d'attente à transmettre et transmises à un terminal relais (12) dans une unité de temps et déterminer un temps pour une transmission de données multimédia de diffusion en continu à transmettre actuelles sur la base de la bande passante de flux montant en temps réel actuelle ;
un module d'évaluation (112) qui est configuré pour évaluer si le temps pour la transmission des données multimédia de diffusion en continu à transmettre actuelles dépasse ou non une valeur prédéfinie ; et
un module de perte de trames (113) qui est configuré pour utiliser une approche de perte de trames pour réduire une quantité de données de téléversement si le temps pour la transmission des données multimédia de diffusion en continu à transmettre actuelles dépasse la valeur prédéfinie.

8. Terminal de diffusion sélective de flux (11) selon la revendication 7, dans lequel le module de détermination (111) comprend spécifiquement :
un sous-module de collecte (1111) qui est configuré pour collecter des données audio et/ou des données vidéo ;
un sous-module de codage (1112) qui est configuré pour réaliser un codage audio et/ou un codage vidéo sur les données audio et/ou les données vidéo collectées, respectivement ;
un sous-module de protocole de diffusion en continu (1113) qui est configuré pour encapsuler les données audio codées et/ou les données vidéo codées en données multimédia de diffusion en continu ; et
un sous-module d'inspection de bande passante (1114) qui est configuré pour placer les données multimédia de diffusion en continu encapsulées dans une file d'attente à transmettre, extraire les données multimédia de diffusion en continu à partir de la file d'attente à transmettre et transmettre les données multimédia de diffusion en continu à un terminal relais (12), et calculer la bande passante de flux montant en temps réel actuelle par détermination en temps réel d'une quantité de données multimédia de diffusion en continu transmises dans une unité de temps.

9. Terminal de diffusion sélective de flux (11) selon la revendication 8, dans lequel le sous-module d'inspection de bande passante (1114) est en outre configuré pour déterminer le temps pour la transmission des données multimédia de diffusion en continu à transmettre actuelles sur la base de la bande passante de flux montant en temps réel actuelle.

10. Terminal de diffusion sélective de flux (11) selon la revendication 9, dans lequel le terminal de diffusion sélective de flux (11) comprend en outre spécifiquement :
un module de transmission (114) qui est configuré pour continuer de transmettre des données multimédia de diffusion en continu restantes séquentiellement à partir de la file d'attente à transmettre si le temps pour la transmission des données multimédia de diffusion en continu à transmettre actuelles ne dépasse pas la valeur prédéfinie.
